# EUROPÄISCHE PATENTSCHRIFT

(11) **EP 4 420 950 B1**
(45) Veröffentlichungstag und Bekanntmachung des Hinweises auf die Patenterteilung: **23.09.2026**
(21) Anmeldenummer: 24152173.1
(22) Anmeldetag: 16.01.2024
(51) Int. Cl.: B61D 19/00, B61D 19/02, B60J 5/06

(54) **WAGENKASTEN EINES SCHIENENFAHRZEUGS UND SCHIENENFAHRZEUG MIT WAGENKASTEN**
BODY OF A RAIL VEHICLE AND RAIL VEHICLE WITH BODY
CAISSE DE VÉHICULE FERROVIAIRE ET VÉHICULE FERROVIAIRE ÉQUIPÉ D'UNE CAISSE DE VÉHICULE

(30) Priorität: 21.02.2023 DE 102023201508
(43) Veröffentlichungstag der Anmeldung: 28.08.2024
(73) Patentinhaber: Siemens Mobility GmbH, 80997 München (DE)
(72) Erfinder: Krickau, Andreas, 91088 Bubenreuth (DE)
(74) Vertreter: Siemens Patent Attorneys

(56) Entgegenhaltungen:
- EP-A1- 3 957 538
- CN-A- 110 341 734
- CN-U- 201 559 662
- DE-U1- 9 408 079
- US-A1- 2004 094 991

## Beschreibung

Die Erfindung betrifft einen Wagenkasten eines Schienenfahrzeugs und ein Schienenfahrzeug mit Wagenkasten.

Bei Schienenfahrzeugen des öffentlichen Personennahverkehrs, wie z.B. Straßenbahnen, U-Bahnen, Metros, etc., kommen in der Regel Schiebetüren zum Einsatz. Übliche Ausprägungen einer Schiebetür sind Außenschiebetüren oder Taschenschiebetüren. Außenschiebetüren gleiten beim Öffnen bzw. Schließen dabei an der Außenkontur des Schienenfahrzeugs entlang. Taschenschiebetüren gleiten beim Öffnen bzw. Schließen in die Seitenwand des Wagenkastens. Beide Ausprägungen haben den Nachteil, dass sie die Breite des Fahrgastraums und somit den für die Fahrgäste nutzbaren Raum des Wagenkastens eines Schienenfahrzeugs, beispielsweise einer Straßenbahn, insbesondere abhängig von ihrer Türblattdicke verringern. So vergrößert insbesondere eine Außenschiebetür die Lichtraum bestimmende Außenkontur des Schienenfahrzeugs, so dass die Außenkontur um die Dicke des Türblatts nach innen versetzt werden muss. Eine Taschenschiebetür wiederum schwächt die Türsäule des Schienenfahrzegs, in die das Türblatt der Taschenschiebetür einfährt und erfordert somit sowohl eine erheblich verstärkte Türsäule als auch im Bereich des eingefahrenen Türblatts eine dickere Seitenwand des Wagenkastens des Schienenfahrzeugs.

Aus der EP_3 957 538 A1 ist eine Schiebetürvorrichtung und ein Fahrzeug mit einer Schiebetürvorrichtung bekannt.

Aus der CN_110 341 734 A ist eine Vorrichtung für eine doppeltürige Schiebetür sowie ein Wagenkasten eines Schienenfahrzeugs mit einer doppeltürigen Schiebetür bekannt.

Aus der CN_201 559 662 U ist eine elektrische Lokomotive mit einer Schiebetür bekannt.

Aufgrund dieser beschriebenen Problematik werden bei Schienenfahrzeugen des öffentlichen Personennahverkehrs, wie z.B. Straßenbahnen, U-Bahnen, Metros, etc., üblicherweise sogenannte Außenschwenk- oder Außenschwingschiebtüren verwendet, die im geschlossenen Zustand bezüglich des Schienenfahrzeugs außenbündig und damit nicht konturvergrößernd sind. Nachteilig ist, dass diese Türen aufgrund der zugrundeliegenden Kinematik, das Türblatt wird vor dem Öffnen nach außen gedrückt und dann erst entlang der Fahrzeugkontur verschoben, sehr komplex, störanfällig und somit teuer und unzuverlässig sind.

Der Erfindung liegt die Aufgabe zugrunde, einen verbesserten Wagenkasten mit wenigstens einer Schiebetür anzugeben, die zuverlässig und auf einfache Weise funktioniert und mit welcher die Ausmaße des Fahrgastraums des Wagenkastens eines Schienenfahrzeugs nicht wesentlich eingeschränkt werden.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dabei weist der Wagenkasten eines Schienenfahrzeugs mit einer Außenkontur wenigstens eine Schiebetür auf, wobei die Schiebetür aus einem oder zwei Türteilen besteht, wobei jedes der Türteile mit wenigstens einem horizontalen Querspriegel verbunden ist, wobei beim Öffnen der Schiebetür das jeweilige Türteil vor der Außenseite der Seitenwand des Wagenkastens und die jeweiligen Querspriegel in der Seitenwand des Wagenkastens geführt werden.

Bei einer erfindungsgemäßen Schiebetür mit einem Türteil erfolgt das Öffnen dabei zu einer Seite, im Wesentlichen parallel zur Fahrzeuglängsachse, je nach Anforderung entweder in Fahrtrichtung oder entgegengesetzt zur Fahrtrichtung des Schienenfahrzeugs. Bei einer erfindungsgemäßen Schiebetür mit zwei Türteilen bewegen sich die beiden Türteile beim Öffnen jeweils in entgegengesetzter Richtung voneinander weg zu einer Seite im Wesentlichen parallel zur Fahrzeuglängsachse - das eine Türteil bewegt sich dabei in Fahrtrichtung und das andere Türteil vom ersten Türteil weg, entgegengesetzt zur Fahrtrichtung des Schienenfahrzeugs. Das Schließen der Schiebetür erfolgt dementsprechend in umgekehrter Reihenfolge, die beiden Türteile bewegen sich wieder aufeinander zu, bis sie sich mittig bezüglich der Schiebetür berühren und die entsprechende Öffnung, beispielsweise den Einstieg des Wagenkastens wieder verschließen. Öffnen und Schließen der Schiebetür erfolgt üblicherweise wenn das Schienenfahrzeug steht, insbesondere an einer Haltestelle.

Die erfindungsgemäße Lösung hat den Vorteil, dass die Schiebetür, die aus einem oder zwei Türteilen besteht, beim Öffnen und Schließen sicher und stabil geführt werden kann und dabei gleichzeitig, sowohl bei geöffneter als auch bei geschlossener Schiebetür, die Außenkontur des Wagenkastens des Schienenfahrzeugs lediglich um die Dicke eines der Türteile, insbesondere um die Dicke eines Türblatts eines der Türteile, im Vergleich zu üblicherweise eingesetzten Fahrzeugtüren vergrößert. Der jeweilige Querspriegel ist dabei jeweils abgesetzt vom jeweiligen Türteil mit der Schiebetür verbunden. Dadurch wird beim Öffnen der Schiebetür insbesondere nur der jeweilige Querspriegel im Wesentlichen horizontal in die Seitenwand des Wagenkastens geführt, während parallel dazu die jeweiligen verbundenen Türteile vor der Außenseite der Seitenwand des Wagenkastens geführt werden und somit keine wesentlichen zusätzlichen Konstruktionsänderungen des Wagenkastens nach sich ziehen. Beim Schließen der Schiebetür wird dementsprechend insbesondere wieder nur der jeweilige Querspriegel im Wesentlichen horizontal aus der Seitenwand des Wagenkastens geführt, während parallel dazu die jeweiligen verbundenen Türteile wieder unverändert vor der Außenseite der Seitenwand des Wagenkastens in den geschlossenen Zustand der Schiebetür rückgeführt werden. Die Ausdehnung bzw. Abmessungen der jeweiligen Querspriegel, also insbesondere deren Dicke als auch deren Höhe kann somit, bei gleichzeitiger Gewährleistung der notwendigen Stabilität der Türteile der Schiebetür, anforderungsgemäß so ausgeführt werden, dass der Raumbedarf eines solchen Querspriegels entsprechend gering ist. Dadurch sind die Auswirkungen auf die, zur Gewährleistung der Stabilität sonst übliche Ausdehnung der Wagenkastentürsäule bzw. des Wagenkastenrohbaus sowie auch insbesondere der Seitenwand nur minimal, wodurch das nutzbare Volumen des Innenraums des Wagenkastens, also des Fahrgastraums, im Wesentlichen gleich bleibt, und demzufolge nicht eingeschränkt bzw. verkleinert wird bzw. werden muss.

Nach einer besonders bevorzugten Ausführungsform der Erfindung weist jedes der Türteile jeweils ein Türblatt und wenigstens eine, mit dem jeweiligen Türblatt verbundene, vertikal verlaufende Stütze auf.

Durch die vertikal verlaufende Stütze, die vorteilhafterweise an einem Ende des Türblatts mit diesem verbunden ist, wird die benötigte Stabilität jedes Türblatts bzw. jedes Türteils und somit der jeweiligen Schiebetür gewährleistet bzw. je nach Ausführung der Stütze noch erhöht. Die Stütze entspricht in der Regel im Wesentlichen der Dicke des verbundenen Türblatts, kann aber im Vergleich zur Dicke des zugehörigen Türblatts von dieser auch deutlich abweichen, insbesondere eine größere Dicke aufweisen, wenn bei Bedarf die Stütze im geöffneten Zustand der zugehörigen Schiebetür beispielsweise den entsprechenden Spalt der Seitenwand, in die der Querspriegel geführt wird, automatisch abdecken soll.

Nach einer weiteren, besonders bevorzugten Ausführungsform der Erfindung ist der jeweilige Querspriegel jeweils mit einem Ende mit dem jeweiligen Türteil und mit dem anderen Ende mit der Seitenwand des Wagenkastens verbunden.

Dadurch ist es besonders einfach möglich, den jeweiligen Querspriegel und somit das jeweils zugehörige Türteil mit einer Einfahrvorrichtung, z.B. einer entsprechenden Gleit- oder Schiebevorrichtung, zu verbinden, die wiederum mit der Seitenwand des Wagenkastens verbunden ist, um beim Öffnen der Schiebetür auf einfache Weise das Einfahren der jeweiligen Türteile in die Seitenwand des Wagenkastens zu ermöglichen.

Nach einer weiteren bevorzugten Ausführungsform der Erfindung liegt im vollständig geöffneten Zustand der wenigstens einen Schiebetür die jeweilige, vertikal verlaufende Stütze des jeweiligen Türteils an der Seitenwand des Wagenkastens an. Die jeweilige, vertikal verlaufende Stütze bildet bei geöffneter Schiebetür demzufolge den Abschluss gegenüber der Seitenwand des Wagenkastens, begrenzt das Einfahren und verhindert somit das ungewollte Einfahren der Türteile in die Seitenwand über einen gewünschten Punkt hinaus und verschließt die Seitenwand automatisch gegenüber z.B. Staub, Müll von Fahrgästen, etc. Die Stütze weist dabei eine größere Dicke als das entsprechende Türblatt auf.

Nach einer weiteren besonders bevorzugten Ausführungsform der Erfindung liegen bei der wenigstens einen Schiebetür mit zwei Türteilen bei geschlossener Schiebetür die beiden vertikal verlaufenden Stützen der jeweiligen Türteile aneinander und berühren sich in vertikaler Richtung über die gesamte Länge gegenseitig. Dadurch wird bei geschlossener Schiebetür in der Ausführung mit zwei Türteilen eine besonders gute Dichtigkeit der zwei Türteile der Schiebetür gewährleistet und somit einerseits der Schutz des Fahrgastraums gegenüber äußeren Umwelteinflüssen wie Temperatur, Feuchtigkeit, etc., sowie andererseits insbesondere beim Betrieb einer Klimaanlage, z.B. im Sommer, oder einer Heizung, z.B. im Winter, die Konstanthaltung der Innentemperatur des Fahrgastraums verbessert.

Nach einer weiteren bevorzugten Ausführungsform der Erfindung unterscheidet sich die Außenkontur des Wagenkastens mit Schiebetür im Vergleich zur Außenkontur des Wagenkastens ohne Schiebetür im Wesentlichen um die Dicke eines Türblatts eines Türteils der Schiebetür.

Bevorzugt weist wenigstens ein Türblatt wenigstens eine Scheibe auf, wobei die Dicke des Türblatts im Wesentlichen der Dicke der Scheibe entspricht.

Besonders bevorzugt liegt die Dicke des Türblatts im Bereich zwischen 5 bis 20 mm.

Durch die geringe Dicke eines solchen Türblatts ist die entsprechende Schiebetür demzufolge gewichtsmäßig leichter als bisher übliche Lösungen, und somit günstiger, aber dennoch robust und stabil konstruierbar, so dass die Schiebetür beim Öffnen und Schließen sicher und stabil geführt werden kann und sich gleichzeitig bei allen Positionen der Schiebetür, insbesondere sowohl bei geöffneter, als auch bei geschlossener Schiebetür, die Außenkontur des Wagenkastens des Schienenfahrzeugs lediglich um wenige Millimeter im Vergleich zu üblicherweise eingesetzten Fahrzeugtüren vergrößert. Dadurch sind beim Rohbau des Wagenkastens keine bzw. keine aufwändigen Konstruktionsänderungen nötig.

Eine weitere bevorzugte Ausprägung der Erfindung ist ein Schienenfahrzeug mit wenigstens einem Wagenkasten nach einem der Ansprüche 1 bis 6.

Nach einer besonders bevorzugten Ausführungsform der Erfindung weist der wenigstens eine Wagenkasten eine Außenbeplankung auf, wobei die wenigstens eine Schiebetür zwischen dem Wagenkasten und der Außenbeplankung geführt wird.

Ist der Fahrzeugrohbau mit einer Außenbeplankung versehen, kann die erfindungsgemäße Schiebetür vorteilhafterweise zwischen Beplankung und Rohbau geführt werden, wobei auch hier beim Öffnen der Schiebetür die jeweiligen Querspriegel der Türteile der Schiebetür in der Seitenwand des Wagenkastens geführt werden. Die jeweiligen Türteile selbst werden entsprechend zwischen der Außenseite der Seitenwand und der Außenbeplankung des Wagenkastens, also vor der Außenseite der Seitenwand und innerhalb der Außenbeplankung des Wagenkastens geführt. Die oben beschriebenen Vorteile der Schiebetür des erfindungsgemäßen Wagenkastens gelten dabei analog auch für die Ausführungsform eines Wagenkastens mit Außenbeplankung.

Besonders bevorzugt ist das Schienenfahrzeug eine Straßenbahn.

Im Weiteren werden bevorzugte Ausführungsbeispiele der Erfindung mit Bezugnahme auf die Zeichnungen näher erläutert. Es zeigen:
- Fig. 1: eine Teilansicht einer geschlossenen Schiebetür eines Wagenkastens eines Schienenfahrzeugs von außerhalb des Wagenkastens,
- Fig. 2: einen Querschnitt der geschlossenen Schiebetür des Wagenkastens aus Figur 1, quer zur Längsrichtung des Wagenkastens,
- Fig. 3: eine Teilansicht einer geöffneten Schiebetür des Wagenkastens aus Figur 1 von außerhalb des Wagenkastens und
- Fig. 4: einen Querschnitt der geöffneten Schiebetür des Wagenkastens aus Figur 1, quer zur Längsrichtung des Wagenkastens.

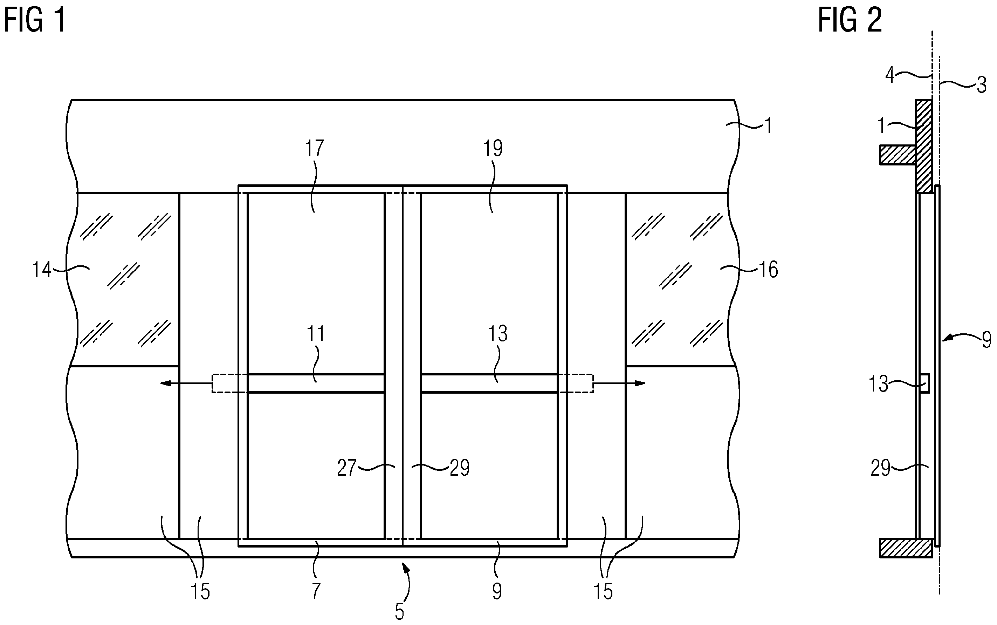

In den Figuren 1 bis 4 werden jeweils gleiche Bestandteile mit den gleichen Bezugsziffern bezeichnet. Der gezeigte Wagenkasten 1 wird zur besseren Übersicht in allen Figuren 1 bis 4 nur umrisshaft und abgesehen von der Schiebetür 5 ohne weitere detaillierte Ausstattungsmerkmale dargestellt. Die im Folgenden anhand der Figuren 1 bis 4 vorliegende Beschreibung der erfindungsgemäßen Ausführung einer Schiebetür 5 mit zwei Türteilen 7, 9 ist entsprechend auch auf eine erfindungsgemäße Ausführung einer Schiebetür mit nur einem Türteil übertragbar, auch wenn diese Ausführung nicht explizit dargestellt ist.

Darüber hinaus ist die in den Figuren 1 bis 4 gezeigte, und beschriebene, erfindungsgemäße Schiebetür 5 in der Ausführung bestehend aus zwei Türteilen 7, 9 lediglich als beispielhaft zu sehen und beschränkt die Art sowie die Anzahl der verwendeten Türen eines Wagenkastens 1 in keiner Weise. So können bei einem Wagenkasten eines Schienenfahrzeugs alle eingebauten Türen der gezeigten Ausführungsform entsprechen, es ist aber auch möglich, je nach Anforderung, neben der gezeigten Ausführungsform im selben Wagenkasten weitere, anders ausgeführte Türen, insbesondere Schiebetüren in einer erfindungsgemäßen Ausführung mit nur einem Türteil, zu verwenden.

Fig. 1 zeigt eine Teilansicht einer geschlossene Schiebetür 5 eines Wagenkastens 1 eines Schienenfahrzeugs von außerhalb des Wagenkastens.

Die Schiebetür 5 weist zwei Türteile 7 und 9 auf, die beispielsweise einen Einstiegsbereich des Fahrgastraums eines Schienenfahrzeugs, beispielsweise einer Straßenbahn, abschließen. Das Türteil 7 besteht dabei aus dem Türblatt 17 und der vertikal verlaufenden Stütze 27, die das Türteil 7 gegen das Türteil 9 in der Mitte der Schiebetür 5 abgrenzt. Das Türteil 9 wiederum besteht aus dem Türblatt 19 und der vertikal verlaufenden Stütze 29, die das Türteil 9 gegen das Türteil 7 in der Mitte der Schiebetür 5 abgrenzt. Durch die vertikal verlaufenden Stützen 27 bzw. 29 wird somit die benötigte Stabilität des jeweiligen Türblatts 17, 19 bzw. Türteils 7, 9 und somit der gesamten Schiebetür 5 gewährleistet bzw. je nach Ausführung der Stützen 27 bzw. 29 noch erhöht. Die vertikal verlaufenden Stützen 27 und 29 berühren sich, wie aus Fig. 1 ersichtlich, gegenseitig über ihre gesamte Länge in vertikaler Richtung, mittig bezüglich der Schiebetür 5 und dichten auf diese Weise den dahinterliegenden Raum, insbesondere den Fahrgastraum des Wagenkastens 1 nach außen gegenüber Umwelteinflüssen wie Temperatur, Feuchtigkeit, etc., ab, und verbessern insbesondere beim Betrieb einer Klimaanlage, z.B. im Sommer, oder einer Heizung, z.B. im Winter, die Konstanthaltung der Innentemperatur des Fahrgastraums des Wagenkastens 1. Unterstützend können die Stützen 27, 29, die beispielsweise aus Metall, aber auch aus anderen Materialien ausgeführt werden können, mit hier nicht gezeigten, zusätzlichen Dichtungshilfsmitteln, beispielsweise Dichtungslippen, Borsten, etc., ausgestattet sein.

Des Weiteren ist das Türteil 7 mit einem Querspriegel 11 und das Türteil 9 mit einem Querspriegel 13 verbunden. Die Querspriegel 11 bzw. 13 befinden sich in der Ansicht gemäß Figur 1 jeweils hinter den Türteilen 7 bzw. 9, also im Inneren des Wagenkastens 1, sind hier aber dennoch sichtbar, da die Türblätter 17, 19 im Wesentlichen mit transparenten Scheiben ausgeführt sind. Dabei weisen die Türblätter 17 bzw. 19 hier jeweils eine Scheibe auf, die auf drei Seiten von einem, beispielsweise metallischen Rahmen umgeben sind und auf der vierten Seite von der jeweiligen vertikalen Stütze 27 bzw. 29 abgeschlossen werden. Die Dicke der Türblätter 17 bzw. 19 entspricht dabei im Wesentlichen der Dicke der Scheibe.

Die Türblätter können je nach Wunsch bzw. Anforderung aber auch mit allen denkbaren und möglichen, sinnvollen anderen, auch nichttransparenten Materialien oder auch in beliebigen Mischformen, transparent und nichttransparent, ausgeführt werden. In jedem Fall liegt die Dicke der Türblätter 17 bzw. 19 bevorzugt im Bereich zwischen 5 bis 20 mm.

Durch die geringe Dicke der Türblätter 17 bzw. 19 ist die Schiebetür 5 demzufolge gewichtsmäßig leichter als bisher verwendete, übliche Lösungen für Türen, insbesondere Schiebetüren, und somit günstiger, aber dennoch robust und stabil konstruierbar, so dass die Schiebetür 5 beim Öffnen und Schließen sicher und stabil geführt werden kann und sich gleichzeitig bei allen Positionen der Schiebetür 5, insbesondere sowohl bei geöffneter, als auch bei geschlossener Schiebetür 5, die Außenkontur des Wagenkastens 1 des Schienenfahrzeugs lediglich um wenige Millimeter im Vergleich zu üblicherweise eingesetzten Fahrzeugtüren vergrößert. Dadurch sind beim Rohbau des Wagenkastens 1 keine bzw. zumindest keine aufwändigen Konstruktionsänderungen nötig.

In der in Figur 1 gezeigten Ausführung sind die Querspriegel 11 bzw. 13, jeweils abgesetzt vom jeweiligen Türteil 7 bzw. 9, jeweils mit einem Ende mit dem zugehörigen Türteil 7 bzw. 9 und mit dem anderen Ende gemäß Figur 1 jeweils seitlich der Schiebetür 5 mit der Innenseite der Seitenwand 15 des Wagenkastens 1 verbunden. Die jeweiligen Verbindungsstellen der Querspriegel 11, 13 mit der Innenseite der Seitenwand 15, insbesondere hier an den zur Seitenwand 15 gehörenden Türsäulen, rechts und links, seitlich der Schiebetür 5, sind von außen nicht sichtbar und deshalb in Fig. 1 als gestrichelt dargestellt. Die jeweiligen Verbindungsstellen liegen dabei unterhalb der Unterkante der Fenster 14 bzw. 16, mit denen der Wagenkasten 1 in Fig. 1 beispielhaft ausgestattet ist, um das Einfahren der Querspriegel 11 und 13 in die Seitenwand 15 zu gewährleisten. Befinden sich die Fenster 14 bzw. 16 entsprechend weit entfernt von der Schiebetür 5, oder gibt es keine Fenster, können die Querspriegel 11 und 13 an einer beliebigen Stelle mit der Seitenwand 15 und demzufolge den Türteilen 17 bzw. 19 unabhängig von der Unterkante der Fenster 14 und 16 verbunden werden.

Diese Verbindungsstellen weisen auf beiden Seiten der Schiebetür 5 jeweils eine, hier ebenfalls nicht sichtbare, bzw. nicht dargestellte, entsprechende Einfahrvorrichtung, z.B. eine übliche Gleit- oder Schiebevorrichtung, auf, mittels derer beim Öffnen der Türteile 7 und 9 der Schiebetür 5 auf einfache Weise lediglich die beiden Querspriegel 11 bzw. 13 in zueinander entgegengesetzte Richtungen im Wesentlichen horizontal in den jeweiligen Abschnitt der Seitenwand 15 des Wagenkastens 1 einfahren bzw. eingeschoben werden, während die mit den Querspriegeln 11 bzw. 13 jeweils verbundenen Türteile 7 bzw. 9 vor der Außenseite der Seitenwand 15 des Wagenkastens 1 geführt werden.

Die Ausdehnung bzw. Abmessungen, insbesondere der in Fig. 1 gezeigte, rechteckige Querschnitt der Querspriegel 11 bzw. 13 sind hier lediglich beispielhaft dargestellt. Die Querspriegel 11 bzw. 13 können unter Voraussetzung der gleichzeitigen Beibehaltung der notwendigen Stabilität auch in beliebig anderer sinnvoller Form ausgeführt werden. Auf diese Weise ist der Raumbedarf der Querspriegel 11, 13 sehr gering, wodurch konstruktive Änderungen des Wagenkastenrohbaus, insbesondere eine Ausdehnung der Wagenkastentürsäulen 15 bzw. der Seitenwand 15 des Wagenkastens 1 in sehr geringem Umfang erforderlich sind, und das nutzbare Volumen des Innenraums des Wagenkastens 1, also des Fahrgastraums, im Wesentlichen gleich bleibt.

In der Fig. 1 sind mittels der beiden Pfeile am jeweiligen Ende der Querspriegel 11 bzw. 13 die Öffnungsrichtungen der beiden Türteile 7, 9 der Schiebetür 5 angedeutet. Beim Öffnen der Schiebetür 5 bewegen sich somit die beiden Türteile 7 und 9 zu jeweils einer Seite, jeweils in entgegengesetzter Richtung voneinander weg, im Wesentlichen parallel zur Fahrzeuglängsachse - beispielsweise bewegen sich dabei das Türteil 9 in Fahrtrichtung und das Türteil 7 entgegengesetzt zur Fahrtrichtung des Schienenfahrzeugs. Beim Schließen der Schiebetür 5 erfolgt die Bewegung der beiden Türteile 7 und 9 dementsprechend umgekehrt, aufeinander zu, bis sich die beiden Türteile wieder mittig berühren und die entsprechende Öffnung, beispielsweise den Einstieg des Wagenkastens 1 wieder verschließen. Öffnen und Schließen der Schiebetür 5 erfolgt üblicherweise, wenn das Schienenfahrzeug hält, insbesondere an einer Haltestelle. Bei einer erfindungsgemäßen Ausführung einer Schiebetür mit nur einem Türteil bewegt sich dementsprechend der eine Türteil beim Öffnen nur zu einer Seite hin. Je nach Anforderung kann die Schiebetür dabei wunschgemäß so ausgeführt und eingebaut werden, dass das Öffnen in Fahrtrichtung oder alternativ entgegengesetzt zur Fahrtrichtung des Schienenfahrzeugs erfolgt.

Fig. 2 zeigt einen Querschnitt durch die geschlossene Schiebetür 5 des Wagenkastens 1 aus Figur 1, quer zur Längsrichtung des Wagenkastens 1.

Dabei zeigt die Figur 2 als Abschluss des Türteils 9 der Schiebetür 5 die vertikal verlaufende Stütze 29 mit Blick in Längsrichtung, beispielsweise in Fahrtrichtung, des Schienenfahrzeugs. Oberhalb bzw. unterhalb davon sind die jeweiligen Teile des Wagenkastens 1, zwischen denen die Schiebetür 5, hier das Türteil 9, angeordnet ist, ausschnittweise dargestellt. Des Weiteren ist die Verbindungsstelle des Querspriegels 13 mit dem Türteil 9, hier beispielhaft mit der Stütze 29, gezeigt. Andere Verbindungsstellen des Querspriegels 13 mit dem Türteil 9 sind ebenfalls möglich. Für das Türteil 7, welches in der Fig. 2 nicht gezeigt ist, gilt analog dasselbe.

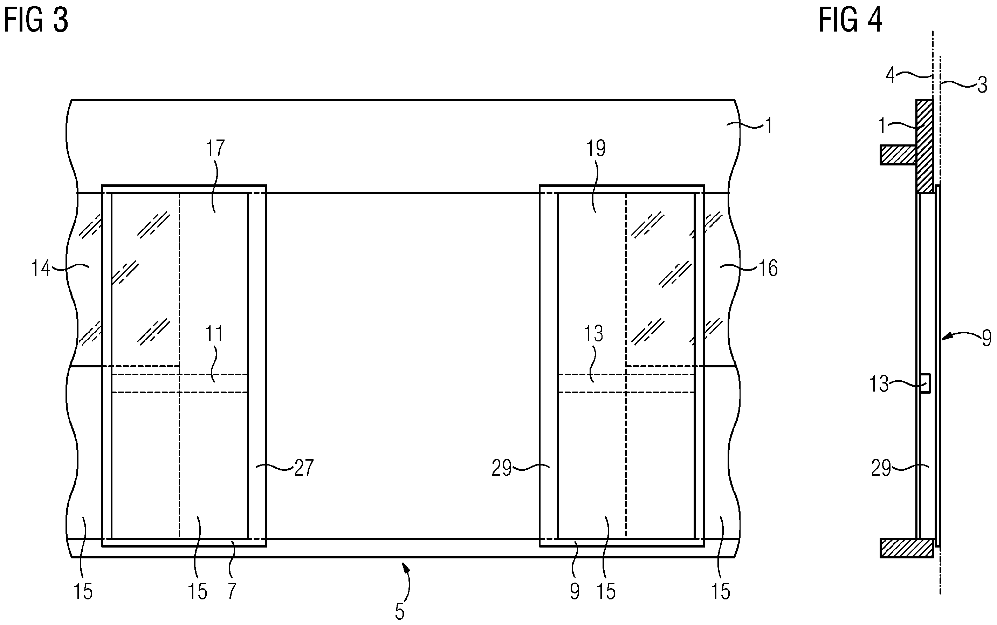

In der Figur 2 ist dabei gut zu sehen, dass sich die Außenkontur 4 des Wagenkastens 1 mit Schiebetür 5 im Vergleich zur Außenkontur 3 des Wagenkastens 1 ohne Schiebetür 5 im Wesentlichen um die Dicke eines Türblatts 17 bzw. 19 eines Türteils 7 bzw. 9 der Schiebetür 5 unterscheidet. Wie in Figur 4 zu sehen, gilt dies nicht nur gemäß Fig. 2 für die geschlossene, sondern auch gemäß Fig. 4 für die geöffnete Schiebetür 5 und erfindungsgemäß ändert sich dies auch nicht für alle beliebigen Positionen der Türteile 7 bzw. 9 der Schiebetür 5 zwischen geschlossenem und geöffnetem Zustand der Schiebetür 5.

Durch die vertikal verlaufenden Stützen 27 bzw. 29, in Fig. 2 hier beispielhaft dargestellt Stütze 29, die vorteilhafterweise an einem Ende des jeweils zugehörigen Türblatts 17 bzw. 19 mit diesem verbunden sind, wird die benötigte Stabilität des jeweiligen Türblatts bzw. des jeweiligen Türteils 7 bzw. 9, hier Türteil 9, und somit der jeweiligen Schiebetür 5 gewährleistet bzw. je nach Ausführung der jeweiligen Stützen 27 bzw. 29 noch erhöht. Die jeweilige Stütze 27 bzw. 29, hier Stütze 29, entspricht dabei im Wesentlichen der Dicke des jeweils verbundenen Türblatts 17 bzw. 19, kann aber im Vergleich zur Dicke des zugehörigen Türblatts, von dieser auch abweichen, insbesondere, wie in Fig. 2 und 4 gezeigt, eine größere Dicke aufweisen, wenn die jeweiligen Stützen 27 bzw. 29 gemäß Darstellung in Fig. 3, bzw. gemäß Darstellung in Figur 4 mittels Stütze 29, im geöffneten Zustand der Schiebetür 5 insbesondere die entsprechenden Spalte der Seitenwand 15, in die die jeweiligen Querspriegel 11 bzw. 13 geführt werden, automatisch abdecken sollen. An der Außenkontur 3 des Wagenkastens mit Schiebetür 5 ändert sich dadurch nichts, da sich eine Änderung der Dicke der Stützen 27 bzw. 29 zur Abdeckung der bzw. des Spalts der Seitenwand 15 nur zum Innern des Wagenkastens 1 auswirkt.

Fig. 3 zeigt eine Teilansicht auf eine geöffnete Schiebetür 5 des Wagenkastens 1 aus Figur 1 von außen. Die Türblätter 17 und 19, der jewiligen Türteile 7 bzw. 9 befinden sich im geöffneten Zustand der Schiebetür 5 vor den jeweiligen Türsäulen 15 und der jeweiligen Seitenwand 15 und decken diese, sowie die Fenster 14 bzw. 16 gemäß gestrichelter Darstellung demzufolge zumindest teilweise ab. Des Weiteren sind, ebenfalls in gestrichelter Darstellung, die jeweils vollständig in die Seitenwand 15, unterhalb der Fenster 14 bzw. 16, eingefahrenen Querspriegel 11 bzw. 13 zu sehen. Die vertikal verlaufenden Stützen 27 bzw. 29 der Türteile 7 bzw. 9 liegen vollständig an den Kopfsäulen 15 der jeweiligen Seitenwand 15 an und verschließen die entsprechenden Spalte in der Seitenwand 15 rechts und links auf jeder Seite der Schiebetür 5. Demzufolge bilden die vertikal verlaufenden Stützen 27 bzw. 29 bei vollständig geöffneter Schiebetür 5 den Abschluss der Türteile 7 bzw. 9 gegenüber der Seitenwand 15 des Wagenkastens 1, begrenzen das Einfahren der Türteile 7 bzw 9 in die Seitenwand 15 und verschließen somit die Seitenwand 15 automatisch gegenüber dem Eindringen von beispielsweise Staub, Müll von Fahrgästen, etc..

Fig. 4 zeigt einen Querschnitt durch die geöffnete Schiebetür 5 des Wagenkastens 1 aus Figur 1, quer zur Längsrichtung des Wagenkastens 1.

In der Figur 4 ist dabei, wie oben bereits beschrieben, gut zu sehen, dass sich die Außenkontur 4 des Wagenkastens 1 mit Schiebetür 5 im Vergleich zur Außenkontur 3 des Wagenkastens 1 ohne Schiebetür 5 auch im geöffneten Zustand der Schiebetür 5 im Wesentlichen nur um die Dicke eines Türblatts 17 bzw. 19 eines Türteils 7 bzw. 9 der Schiebetür 5 unterscheidet, sodass sich die Außenkontur 3 des betreffenden Wagenkastens 1 des Schienenfahrzeugs im Vergleich zu üblicherweise eingesetzten Fahrzeugtüren für alle beliebigen Positionen der erfindungsgemäßen Schiebetür 5 gleichbleibend lediglich um die Dicke eines der Türblätter 17 bzw. 19 eines der Türteile 7 bzw. 9, hier anhand Türteil 9 zu sehen, vergrößert.

Selbstverständlich ist die erfindungsgemäße Lösung nicht auf die Ausführungsformen gemäß der Figuren 1 bis 4 beschränkt, sondern umfasst implizit ebenfalls alle weiteren, erfindungsgemäß möglichen Abweichungen der in den Figuren 1 bis 4 gezeigten Ausführungsformen, insbesondere bezüglich der Ausprägung der Formen und/oder Abmessungen der Querspriegel 11, 13 sowie der vertikalen Stützen 27, 29.

## Patentansprüche

1. Wagenkasten (1) eines Schienenfahrzeugs mit einer Außenkontur (3), mit wenigstens einer Schiebetür (5), wobei die Schiebetür (5) aus einem oder zwei Türteilen (7, 9) besteht, wobei jedes der Türteile (7, 9) mit wenigstens einem horizontalen Querspriegel (11, 13) verbunden ist,
**dadurch gekennzeichnet, dass**
beim Öffnen der Schiebetür (5) das jeweilige Türteil (7, 9) vor der Außenseite der Seitenwand (15) des Wagenkastens (1) und der wenigstens eine Querspriegel (11, 13) in der Seitenwand (15) des Wagenkastens (1) geführt wird.

2. Wagenkasten (1) nach Anspruch 1,
**dadurch gekennzeichnet, dass**
jedes der Türteile (7, 9) ein Türblatt (17, 19) und wenigstens eine, mit dem jeweiligen Türblatt (17, 19) verbundene, vertikal verlaufende Stütze (27, 29) aufweist.

3. Wagenkasten (1) nach Anspruch 1 oder 2,
**dadurch gekennzeichnet, dass**
der jeweilige Querspriegel (11, 13) jeweils mit einem Ende mit dem jeweiligen Türteil (7, 9) und mit dem anderen Ende mit der Seitenwand (15) des Wagenkastens (1) verbunden ist.

4. Wagenkasten (1) nach einem der vorherigen Ansprüche,
**dadurch gekennzeichnet, dass**
im vollständig geöffneten Zustand der wenigstens einen Schiebetür (5) die jeweilige, vertikal verlaufende Stütze (27, 29) des jeweiligen Türteils (7, 9) an der Seitenwand (15) des Wagenkastens (1) anliegt.

5. Wagenkasten (1) nach einem der vorherigen Ansprüche,
**dadurch gekennzeichnet, dass**
sich bei der wenigstens einen Schiebetür (5) mit zwei Türteilen (7, 9) die zwei Türteile (7, 9) beim Öffnen entgegengesetzt voneinander wegbewegen, wobei bei geschlossener Schiebetür (5) die beiden vertikal verlaufenden Stützen (27, 29) der jeweiligen Türteile (7, 9) aneinander liegen und sich in vertikaler Richtung über die gesamte Länge gegenseitig berühren.

6. Wagenkasten (1) nach einem der vorherigen Ansprüche,
**dadurch gekennzeichnet, dass**
sich die Außenkontur (3) des Wagenkastens (1) mit Schiebetür (5) im Vergleich zur Außenkontur (4) des Wagenkastens (1) ohne Schiebetür (5) im Wesentlichen um die Dicke eines Türblatts (17, 19) unterscheidet.

7. Wagenkasten (1) nach Anspruch 6,
**dadurch gekennzeichnet, dass**
wenigstens ein Türblatt (17, 19) der Schiebetür (5) wenigstens eine Scheibe aufweist, wobei die Dicke des Türblatts (17, 19) im Wesentlichen der Dicke der Scheibe entspricht.

8. Wagenkasten (1) nach Anspruch 6 oder 7,
**dadurch gekennzeichnet, dass**
die Dicke des Türblatts (17, 19) im Bereich zwischen 5 bis 20 mm liegt.

9. Schienenfahrzeug mit wenigstens einem Wagenkasten (1) nach einem der Ansprüche 1 bis 8.

10. Schienenfahrzeug nach Anspruch 9, wobei der wenigstens eine Wagenkasten (1) eine Außenbeplankung (23) aufweist,
**dadurch gekennzeichnet, dass**
die wenigstens eine Schiebetür (5) zwischen dem Wagenkasten (1) und der Außenbeplankung (23) geführt wird.

11. Schienenfahrzeug nach Anspruch 9 oder 10,
**dadurch gekennzeichnet, dass**
das Schienenfahrzeug eine Straßenbahn ist.

## Claims

1. Body (1) of a rail vehicle with an outer contour (3), with at least one sliding door (5), wherein the sliding door (5) consists of one or two door parts (7, 9), wherein each of the door parts (7, 9) is connected to at least one horizontal transverse cross bow (11, 13),
**characterised in that**
when the sliding door (5) is opened, the respective door part (7, 9) is guided in front of the outer face of the side wall (15) of the body (1) and the at least one cross bow (11, 13) in the side wall (15) of the body (1).

2. Body (1) according to claim 1,
**characterised in that**
each of the door parts (7, 9) has a door leaf (17, 19) and at least one support (27, 29) which runs vertically and is connected to the respective door leaf (17, 19).

3. Body (1) according to claim 1 or 2,
**characterised in that**
the respective cross bow (11, 13) is connected in each case with one end to the respective door part (7, 9) and with the other end to the side wall (15) of the body (1).

4. Body (1) according to one of the preceding claims,
**characterised in that**
in the fully opened state of the at least one sliding door (5), the respective, vertically running support (27, 29) of the respective door part (7, 9) rests on the side wall (15) of the body (1).

5. Body (1) according to one of the preceding claims,
**characterised in that**
with the at least one sliding door (5) with two door parts (7, 9), the two door parts (7, 9) move opposingly away from one another when opened, wherein when the sliding door (5) is closed, the two vertically running supports (27, 29) of the respective door parts (7, 9) rest against one another and mutually touch in the vertical direction over the entire length.

6. Body (1) according to one of the preceding claims,
**characterised in that**
the outer contour (3) of the body (1) with sliding door (5) compared with the outer contour (4) of the body (1) without sliding door (5) differs essentially by the thickness of a door leaf (17, 19).

7. Body (1) according to claim 6,
**characterised in that**
at least one door leaf (17, 19) of the sliding door (5) has at least one pane, wherein the thickness of the door leaf (17, 19) corresponds essentially to the thickness of the pane.

8. Body (1) according to claim 6 or 7,
**characterised in that**
the thickness of the door leaf (17, 19) lies in the range of between 5 to 20 mm.

9. Rail vehicle with at least one body (1) according to one of claims 1 to 8.

10. Rail vehicle according to claim 9, wherein the at least one body (1) has an outer cladding (23),
**characterised in that**
the at least one sliding door (5) is guided between the body (1) and the outer cladding (23).

11. Rail vehicle according to claim 9 or 10,
**characterised in that**
the rail vehicle is a tram.

## Revendications

1. Caisse (1) d'un véhicule ferroviaire ayant un contour (3) extérieur, comprenant au moins une porte (5) coulissante, dans laquelle la porte (5) coulissante est constituée d'une ou de deux parties (7, 9) de porte, dans laquelle chacune des parties (7, 9) de porte est assemblée à au moins un cintre (11, 13) transversal horizontal,
**caractérisée en ce que**,
à l'ouverture de la porte (5) coulissante, la partie (7, 9) respective de la porte est guidée devant la face extérieure de la paroi (15) latérale de la caisse (1) et du au moins un cintre (11, 13) transversal dans la paroi (15) latérale de la caisse (1).

2. Caisse (1) suivant la revendication 1,
**caractérisée en ce que**
chacune des parties (7, 9) de la porte a un vantail (17, 19) de porte et au moins un appui (27, 29) assemblé au ventail (17, 19) respectif de porte et s'étendant verticalement.

3. Caisse (1) suivant la revendication 1 ou 2,
**caractérisée en ce que**
le cintre (11, 13) transversal respectif est assemblé respectivement par une extrémité à la partie (7, 9) respective de porte et par l'autre extrémité à la paroi (15) latérale de la caisse (1).

4. Caisse (1) suivant l'une des revendications précédentes,
**caractérisée en ce que**
dans l'état ouvert complètement de la au moins une porte (5) coulissante, les appuis (27, 29) respectifs, s'étendant verticalement, de la partie (7, 9) respective de la porte s'appliquent à la paroi (15) latérale de la caisse (1).

5. Caisse (1) suivant l'une des revendications précédentes,
**caractérisée en ce que**
pour la au moins une porte (5) coulissante ayant deux parties (7, 9) de porte, les deux parties (7, 9) de porte s'éloignent l'une de l'autre en sens contraire à l'ouverture, dans laquelle, lorsque la porte (5) coulissante est fermée, les deux appuis (27, 29), s'étendant verticalement, des parties (7, 9) respectives de porte s'appliquent l'un à l'autre et se touchent mutuellement dans la direction verticale sur toute la longueur.

6. Caisse (1) suivant l'une des revendications précédentes,
**caractérisée en ce que**
le contour (3) extérieur de la caisse (1), ayant la porte (5) coulissante, se distingue, sensiblement de l'épaisseur d'un vantail (17, 19) de porte, du contour (4) extérieur de la caisse (1) sans porte (5) coulissante.

7. Caisse (1) suivant la revendication 6,
**caractérisée en ce qu'**
au moins un vantail (17, 19) de la porte (5) coulissante a au moins une vitre, l'épaisseur du vantail (17, 19) de la porte correspondant sensiblement à l'épaisseur de la vitre.

8. Caisse (1) suivant la revendication 6 ou 7,
**caractérisée en ce que**
l'épaisseur du vantail (17, 19) de la porte est comprise entre 5 et 20 mm.

9. Véhicule ferroviaire comprenant au moins une caisse (1) suivant l'une des revendications 1 à 8.

10. Véhicule ferroviaire suivant la revendication 9, dans lequel la au moins une caisse (1) a un revêtement (23) extérieur de planche,
**caractérisé en ce que**
la au moins une porte (5) coulissante passe entre la caisse (1) et le revêtement (23) extérieur de planche.

11. Véhicule ferroviaire suivant la revendication 9 ou 10,
**caractérisé en ce que**
le véhicule ferroviaire est un tramway.
